# EUROPÄISCHE PATENTSCHRIFT

(11) **EP 2 013 484 B1**
(45) Veröffentlichungstag und Bekanntmachung des Hinweises auf die Patenterteilung: **19.06.2013**
(21) Anmeldenummer: 07728273.9
(22) Anmeldetag: 19.04.2007
(51) Int. Cl.: F04D 29/056

(54) **BESCHICHTUNG FÜR GASLAGER**
COATING FOR GAS BEARINGS
REVETEMENT POUR PALIER A GAZ

(30) Priorität: 29.04.2006 DE 102006020102
(43) Veröffentlichungstag der Anmeldung: 14.01.2009
(73) Patentinhaber: Oerlikon Leybold Vacuum GmbH, 50968 Köln (DE)
(72) Erfinder: BLUMENTHAL, Roland, 50374 Erftstadt (DE); FROITZHEIM, Michael, 41539 Dormagen (DE)
(74) Vertreter: von Kreisler Selting Werner
(86) Internationale Anmeldenummer: PCT/EP2007/053811
(87) Internationale Veröffentlichungsnummer: WO 2007/125042

(56) Entgegenhaltungen:
- EP-A- 1 024 294
- DE-A1- 19 915 983
- DE-A1- 19 950 463

## Beschreibung

Die Erfindung betrifft eine Vakuumpumpe, bei der das Gaslager mit einer Hartschicht beschichtet ist, sowie ein Verfahren zur Herstellung dieses Gaslagers einer Vakuumpumpe.

Beim Einsatz von kontaktfreien und reibungsarmen Gaslagern in schnell drehenden Gasfördermaschinen wie Turbomolekularpumpen oder Turbo-Radialgebläsen (beispielsweise Turbostream^{®}) ergibt sich sowohl beim Start derartiger Maschinen wie auch beim Anhalten eine Phase der Trockenreibung (Festkörperreibung) zwischen den relativ zueinander drehenden Lagerkomponenten, in der der Gasdruck nicht ausreicht, die erforderliche Lagerstützkraft aufzubauen, die einen berührungslosen Lagerungsbetrieb ermöglicht. Je nach konstruktiver Auslegung ergibt sich so eine Grenzdrehzahl unterhalb der Trockenreibung auftritt.

Zur Erhöhung der Lebensdauer der von Reibung betroffenen Lagerelemente werden hierfür sinnvollerweise verschleißbeständige Werkstoffe eingesetzt. Grundsätzlich gilt für ein bestimmtes tribologisches System, dass mit Zunahme der Härte der Verschleißwiderstand steigt, die Bearbeitbarkeit solcher Werkstoffe jedoch erschwert wird. Der mögliche Verschleißwiderstand von harten Werkstoffen wird demnach durch deren Bearbeitbarkeit begrenzt.

Bislang mussten die eingesetzten Hartstoffe durch spannende Feinbearbeitung wie beispielsweise Honen oder Diamantieren geformt werden. Diese Arbeitsgänge sind nicht nur sehr aufwändig, sondern beschränken auch das eingesetzte Hartstoffmaterial in seiner Härte, da die Bearbeitungswerkzeuge jeweils eine höhere Härte aufweisen müssen.

Die DE 34 396 48 A1 beschreibt beispielsweise auch die Erzeugung von Lagerflächen durch Schüttung von Hartstoffkugeln, um zunächst eine dichteste Kugelpackung zu erhalten. Anschließend werden dann diese Flächen durch Walzen verdichtet und dann diamantiert.

Die spannende Bearbeitung limitiert also die Anzahl der in Frage kommenden Hartstoffe. Dadurch kann nur beschränkt auf die erwünschten spezifischen tribologischen Eigenschaften eingegangen werden.

Die Besonderheit tribologischer Systeme unter den Bedingungen von Gasfördermaschinen besteht darin, dass eine wasserhaltige Adsorbtionsschicht, die unter atmosphärischer Umgebung entsteht, im Vakuum nicht mehr aufgebaut werden kann. Unter atmosphärischen Bedingungen kann dieser Wasserfilm einerseits als Schmierstoff dienen und andererseits tribochemische Reaktionen auf den beteiligten Oberflächen hervorrufen, die das Verschleißverhalten maßgeblich beeinflussen. Schichtsysteme, bei denen die atmosphärische Adsorbtionsschicht einen Verschleiß mindernden und damit positiven Effekt ausübt, können daher unter Vakuum oder Inertgas einen deutlich schlechteren Verschleißwiderstand aufweisen (H. Czichos, K-H. Habig: "Tribologie Handbuch, Reibung und Verschleiß", 2. Auflage 2003, Friedr. Vieweg & Sohn Verlag, Wiesbaden, S. 404 ff.; D. Klaffke: "Verschleiß in trockener Luft", Tribologie und Schmierungstechnik, Vol. 44., Nr. 7(1997), S. 219-224)
Umgekehrt können Schichtsysteme, die für Vakuumbedingungen optimiert sind, unter atmosphärischen Bedingungen einen schlechteren Verschleißwiderstand haben.

Diese Nachteile im Vakuum, die sich aus dem fehlenden Wasserfilm ergeben, können zum einen Pumpen im Hochvakuum wie Turbomolekularpumpen aber auch Turbo-Radialgebläse betreffen.

Das bislang in Lagern von Vakuumpumpen eingesetzte Öl und Fett als Schmierstoff hat den Nachteil, dass es insbesondere bei Hochvakuumanwendungen verdampfen kann und so zu einem unerwünschten Partialdruck führt und somit Schmierstoff entweichen kann. Der sonst bei atmosphärischen Pumpanwendungen vorhandene Sauerstoff, der üblicherweise die reaktiven Oberflächen passivieren kann, fehlt gerade bei Vakuumanwendungen. Auch der sonst bei unter Atmosphäre ablaufenden Pumpanwendungen stets vorhandene Wasserfilm auf der Oberfläche der Welle bzw. der Rotoren fällt im Vakuum weg. Unter diesen Randbedingungen ergeben sich Grenzflächenreaktionen der beteiligten Verschleißpartner, die das Verschleißverhalten bestimmen. Eine Minimierung des Verschleißes kann grundsätzlich erreicht werden, indem tribochemisch gebildete Reaktionsprodukte die Reibzahl minimieren, die Adhäsionsneigung der Grenzflächen verringert wird, die Oberflächenhärte erhöht wird und/oder keine tribochemische Reaktion stattfindet.

EP 1024294 beschreibt eine Vakuumpumpe mit Gaslagerung, wobei das Gaslager unbeschichtet ist.

DE 19725784 A1 beschreibt die dynamische Gaslagerung einer schnell drehenden Welle beispielsweise für den Einsatz in einem schnell drehenden Spiegelrad, wie es beispielsweise in Scannern und Druckern eingesetzt wird. Dies sind Anwendungen bei atmosphärischem Druck.

WO 02/10598 A1 beschreibt die dynamische Gaslagerung einer Motorspindel ebenfalls bei atmosphärischem Druck.

DE 19821601 C1 beschreibt die Gaslagerung einer schnell drehenden Welle bei atmosphärischem Druck in Anwendungen wie Scannern oder Druckern.

WO 02/35099 A1 beschreibt eine Vakuumpumpe, bei der die Welle mit Kugellagern gelagert wird.

WO 94/6228 A1 beschreibt eine Vakuumpumpe, bei der der Rotor aus einer speziellen Aluminium-Lithium-Legierung besteht.

DE 4403340 A1 beschreibt die Beschichtung von aerostatischen Lagern mit Hartstoffen durch die Schüttung und anschließende Walzung der Hartstoffe, woran sich Diamantieren der Oberfläche anschließt.

DE 19950463 B4 beschreibt die CVD-Beschichtung von Gaslagern in atmosphärischen Anwendungen wie Wellen von Festplatten. In den beschriebenen Verfahren wird die Beschichtung notwendigerweise teilweise entfernt, womit die Beschichtung immer zwingend strukturiert ist.

Aufgabe der vorliegenden Erfindung ist es also auch im Vakuum ein Gaslager bereitzustellen, bei dem der Verschleißwiderstand beim Einsatz von Hartstoffschichten zwar minimiert werden kann, aber dennoch das Gaslager möglichst einfach hergestellt werden kann.

Die der Erfindung zugrunde liegende Aufgabe wird gelöst in einer ersten Ausführungsform durch eine schmiermittelfreie Vakuumpumpe 1 mit einer Ansaugöffnung 2, einer Auslassöffnung 3, einer einen Gaslager-Rotor 16 tragenden Welle 4, die in Gaslagern 5 gehalten wird, dadurch gekennzeichnet, dass mindestens die der Welle 4 und/oder dem Gaslager-Rotor 16 zugewandte Gaslageroberfläche 9 eine Hartschicht 10 mit einer Schichtdicke in einem Bereich von 0,5 bis 30 µm aus einem Material aufweist, das eine Mikrohärte von mindestens 1000 HK bei 0,01 N Messkraft aufweist.

Die erfindungsgemäße Vakuumpumpe 1 weist vorteilhafterweise mindestens eine Ansaugöffnung 2 und mindestens eine Auslassöffnung 3 und mindestens ein Gehäuse 15 auf. Vorteilhafterweise bildet mindestens ein Rotor 6 und mindestens ein Stator 7 einen schmiermittelfreien, von den zu fördernden Gasen durchströmten Förderraum 8.

Vakuumpumpen im Sinne der Erfindung sind Pumpen für den Einsatz im Hochvakuum bis hin zu Pumpen zum Einsatz im Vorvakuum. Zu ersteren Pumpen gehören beispielsweise mechanisch-kinetische Vakuumpumpen wie Seitenkanalverdichter, Turboverdichter (axial, radial), Molekularpumpen und Turbomolekularpumpen. Zur Gruppe der Turboverdichter gehören beispielsweise Turbo-Radialgebläse wie beispielsweise Turbo-Stream^{®}.

Neben der vereinfachten Bearbeitung führt der Einsatz kostengünstiger Substratwerkstoffe zur Kosteneinsparung. Darüber hinaus besteht die Möglichkeit, Beschichtungen zu wählen, die nochmals härter sein können als die derzeit hierfür nutzbaren Strukturwerkstoffe, was zur Lebensdauererhöhung der Bauteile führen kann.

Durch die erfindungsgemäß besonders dünne Ausgestaltung der Hartschicht 10 können die möglicherweise notwendigen Strukturelemente in den Statorelementen 11 der Gaslager 5 beispielsweise durch spannende Feinbearbeitung des Materials aus dem die Statorelemente 11 sind geformt oder strukturiert werden, so dass der Oberfläche der Hartschicht 10 durch diese Formung oder Strukturierung dennoch genau nachgebildet wird. Dies kann beispielsweise eine Stahl- oder Aluminiumlegierung sein. Durch die geringe Schichtdicke der Hartschicht werden diese Strukturelemente dann exakt mit der nötigen Präzision von etwa bis zu 1 µm trotz der auf der Statorelementen vorgesehenen Hartschicht 10 abgebildet werden. Eine Bearbeitung des Materials der Hartschicht 10 ist deshalb vorteilhafterweise nicht erforderlich. Die Hartschicht 10 selbst muss daher im Unterschied zum Stand der Technik keine zusätzliche Strukturierung aufweisen und kann im Wesentlichen glatt sein.

Die Hartschicht 10 der erfindungsgemäßen Vakuumpumpe 1 ist vorzugsweise im Wesentlichen glatt, da hierdurch im Unterschied zu den bekannten Gaslagern eine kostenintensive und aufwendige Nachbearbeitung der Hartschicht 10 wie beispielsweise in DE 4403340 A1 oder DE 19950463 B4 nicht notwendig ist. Sollte eine Strukturierung der entstehenden Oberfläche 9 erwünscht sein, kann diese nämlich im Unterschied zu diesem vorbekannten Stand der Technik auch dadurch erzeugt werden, dass die darunter liegenden Materialien 11 wie beispielsweise Stahl- oder Aluminiumlegierungen wesentlich leichter zu bearbeiten sind.

Die Gaslager 5 bestehen vorteilhafterweise im Wesentlichen aus Gaslager-Statorelementen 11, Gaszufuhreinrichtungen 12 und Gasauslassöffnungen 13. Hierdurch wird die Ausbildung des Gaspolsters besonders vereinfacht.

Die Statorelemente 11 unterhalb der Hartschicht 10 sind vorzugsweise dergestalt strukturiert, dass diese als Gaszufuhreinrichtung 12 und Gasauslassöffnungen 13 Einlass- 12 und Auslasskanäle 13 aufweisen. So können die Gaszufuhreinrichtungen 12 und Gasauslassöffnungen 13 besonders einfach in die Statorelemente 11 integriert werden.

Vorteilhafterweise weist nur derjenige Teil der Statorelemente 11 die Hartschicht 10 auf, der der Welle 4 direkt zugewandt ist. Dadurch können die Statorelemente 11 durch Einsparung der Hartstoffe wesentlich günstiger gefertigt werden.

Vorteilhafterweise ist das Material der Hartschicht 10 ausgewählt aus Kohlenstoff oder harte Verbindungen mit Kohlenstoff, insbesondere Carbide, Nitride oder Carbonitride der Metalle Al, W, Cr oder Ti. Solche Schichten können als ein- oder mehrphasige Schichtsysteme bis hin zu gradierten Schichtverbunden realisiert werden.

Vorzugsweise variiert die Schichtdicke der Hartschicht 10 über die gesamte Hartschicht 10 hinweg nicht mehr als 10%. Durch diese besonders ebenmäßige Fertigung der Hartschicht 10 kann die Lebensdauer der erfindungsgemäßen Vakuumpumpen deutlich gesteigert werden. Daher beträgt auch die Rₐ-Rauhigkeit der Hartschicht 10 vorteilhafterweise bis zu 500 nm, insbesondere bis zu 100 nm. Die Rauhigkeit wird in Rₐ gemäß DIN EN ISO 4287 angegeben. Rₐ im Sinne der Erfindung ist die mittlere Rauhigkeit und gibt den mittleren Abstand eines Messpunktes auf der Oberfläche zur Mittellinie an. Die Mittellinie schneidet innerhalb der Bezugsstrecke das tatsächliche Profil so, dass die Summe der betragsmäßigen Profilabweichungen bezogen auf die Mittellinie minimal wird.

Eine mechanische Nachbearbeitung der Bauteile nach der Beschichtung ist insbesondere dann nicht mehr erforderlich, wenn die Schichtdicke der erfindungsgemäßen Hartschicht 10 vorzugsweise in einem Bereich von 1 bis 5 µm, insbesondere 1 bis 2,5 µm liegt. Dadurch können die funktionsbedingten Toleranzen der Gaslagerung besonders einfach eingehalten werden.

In einer weiteren Ausführungsform wird die der Erfindung zugrunde liegende Aufgabe gelöst durch ein Verfahren zur Herstellung eines Gaslagers einer erfindungsgemäßen Vakuumpumpe, bei dem man die Hartschicht 10 durch ein Beschichtungsverfahren aufbringt, das ausgewählt ist aus der Gruppe PVD, CVD, Elektrolyse oder Implantation von ungeladenen Atomen oder Molekülen. Die Abkürzung PVD steht in diesem Fall für physikalische Dampfbeschichtung und bezeichnet alle Dampfbeschichtungsprozesse, bei denen keine chemische Reaktion an der Oberfläche stattfindet. CVD bezeichnet chemische Dampfbeschichtungen, bei denen nach Aufdampfung von so genannten Vorläufermolekülen diese an der Oberfläche zu bestimmten Verbindungen reagieren.

Hierbei handelt es sich um Verfahren, die Verschleißschutzschichten 10 physikalisch (PVD) oder chemisch (CVD) aus der Gasphase auf den Substratwerkstoff 11 abscheiden. Dabei ist es besonders vorteilhaft, wenn man als Beschichtungsverfahren einen plasmaunterstützten PVD- oder CVD-Prozess einsetzt. Dabei werden diese Verfahren durch das Zünden eines Plasmas unterstützt, was unter anderem zur Absenkung der Prozesstemperatur führt. Dies ist insbesondere bei der Beschichtung mit thermisch empfindlichen Substratwerkstoffen 11 von Vorteil. Die Beschichtungen 10 können aber auch beispielsweise durch Implantieren von ungeladenen Atomen oder Molekülen (beispielsweise Dichronite^{®}) aufgebracht werden, wenn sie ein Gleiten idealerweise ohne Adhäsion oder Abrasion unter Vakuum oder inerten trockenen Gasen ermöglichen.

Vor der Beschichtung ätzt man in einem gesonderten Verfahrensschritt die Oberfläche 9 vorteilhafterweise mit Ionen, insbesondere mit Argonionen, um so eine besonders hohe Haftfestigkeit der aufgebrachten Hartschicht 10 zu erzielen.

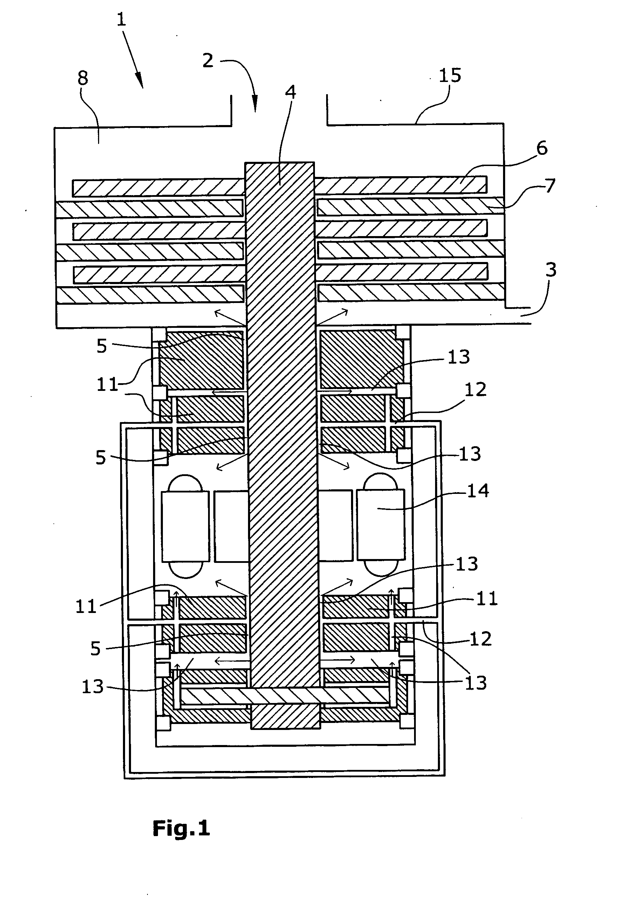

Figur 1 zeigt einen Querschnitt einer erfindungsgemäßen Vakuumpumpe 1 am Beispiel einer Turbomolekularpumpe.
Figur 2 zeigt als Ausschnittsvergrößerung die Hartschicht 10 auf der Oberfläche 9 der Statoren 11 mit der von der Hartschicht 10 eingeschlossenen Welle 4.
Figur 3 zeigt verschiedene Ausgestaltungsformen der Statoren 11 (a: Spiralrillenbauform, b: Kippsegmentbauform, c: Garrettbauform, d: MTI-Bauform).

Im Folgenden wird die Erfindung an Hand eines konkreten Ausführungsbeispiels erläutert, wodurch der Gegenstand der Erfindung jedoch nicht hierauf beschränkt ist:

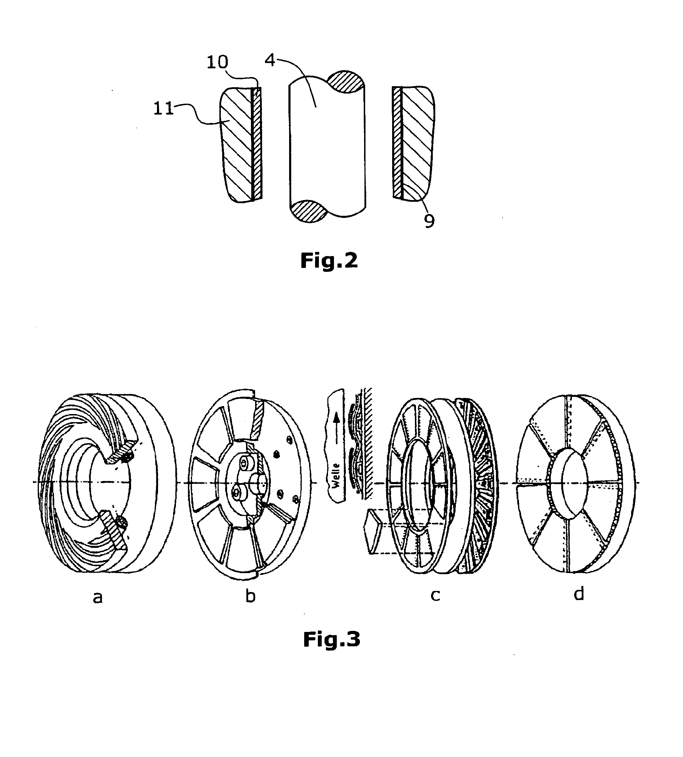

Das Gaslager 5 bzw. die Gaslagerkomponente kann eine kreissymmetrische Scheibe eines axialen Gaslagers mit konzentrisch angeordneten und spiralförmig verlaufenden Gaskanälen sein (vgl. Fig. 3 a). Das Bauteil wurde aus einem legierten Stahl gefertigt. Um die Funktion der Axiallagerkomponente zu gewährleisten, musste deren Oberseite, wie auch die der korrespondierenden Gegenscheibe poliert werden. Die Oberfläche 9 dieses Bauteils wurde mit einer PVD-Hartstoffschicht 10 beschichtet, wie sie beispielsweise unter den Markennamen BALINIT^{®} von der Firma Balzers Verschleißschutz GmbH, Bingen, vertrieben wird. Während des Anfahrens in den Betriebszustand und des Abbremsens aus dem Betriebszustand hatten die beiden Lagerscheiben Kontakt, wodurch es zur Gleitreibung kam. Um eine Beschichtung 10 mit hoher Haftfestigkeit erzielen zu können, wurde die Bauteiloberfläche 9 einer reinigenden Vorbehandlung unterzogen. Dabei wurde eine reine metallische Oberfläche 9 durch Ionenätzen mit Argonionen erzielt. Zum Verschleißschutz wurde dann eine harte Metall-Kohlenstoff-PVD-Schicht 10 vom Typ "ME-C:H" aufgebracht. Die Schichtdicke betrug etwa 4 µm. Dadurch wurde die polierte Oberflächenbeschaffenheit exakt nachgebildet. Die Gegenscheibe wurde in der gleichen Weise behandelt. Mit einer gezielten Anordnung kohlenstoffatomreicher und metallatomreicher Phasen mit jeweils unterschiedlichen tribologischen Eigenschaften, bestand also hierbei die Möglichkeit, das Verschleißverhalten zu steuern und an die Umgebungsbedingungen anzupassen. Es wurde eine Schicht 10 mit einer Härte von 1000 HK bei einer Messkraft von 0,01 N erzielt. Dadurch konnte ein hoher Widerstand gegen adhäsiven Verschleiß bei höheren Gleitgeschwindigkeiten auch unter Vakuumbedingungen erreicht werden. Im Versuch konnte keinerlei Verschleiß festgestellt werden.

## Patentansprüche

1. Schmiermittelfreie Vakuumpumpe (1) mit einer Ansaugöffnung (2), einer Auslassöffnung (3), einer einen Gaslager-Rotor tragenden Welle (4), die in Gaslagern (5) gehalten wird, **dadurch gekennzeichnet, dass** mindestens die der Welle (4) und/oder dem Gaslager-Rotor (16) zugewandte Gaslageroberfläche (9) eine Hartschicht (10) mit einer Schichtdicke in einem Bereich von 0,5 bis 30 µm aus einem Material aufweist, das eine Mikrohärte von mindestens 1000 HK bei 0,01 N Messkraft aufweist.

2. Vakuumpumpe (1) gemäß Anspruch 1, **dadurch gekennzeichnet, dass** sie Gaslager-Statorelemente (11) umfasst, die dergestalt strukturiert sind, dass sie als Gaszufuhreinrichtungen (12) und Gasauslassöffnungen (13) Einlass- und Auslasskanäle aufweisen.

3. Vakuumpumpe (1) gemäß Anspruch 1, **dadurch gekennzeichnet, dass** nur derjenige Teil der Gaslager-Statorelemente (11) die Hartschicht (10) aufweist, der der Welle (4) direkt zugewandt ist.

4. Vakuumpumpe (1) gemäß Anspruch 1, **dadurch gekennzeichnet, dass** das Material der Hartschicht (10) ausgewählt ist aus Kohlenstoff oder Carbiden, Nitriden oder Carbonitriden der Metalle W, Cr oder Ti.

5. Vakuumpumpe (1) gemäß Anspruch 1, **dadurch gekennzeichnet, dass** die Schichtdicke der Hartschicht (10) über die gesamte Schicht hinweg bis zu 10 % variiert.

6. Vakuumpumpe (1) gemäß Anspruch 1, **dadurch gekennzeichnet, dass** die Rₐ-Rauhigkeit der Hartschicht (10) bis zu 500 nm, insbesondere bis zu 100 nm beträgt.

7. Vakuumpumpe (1) gemäß Anspruch 1, **dadurch gekennzeichnet, dass** die Schichtdicke der Hartschicht (10) in einem Bereich von 1 bis 5 µm, insbesondere 1 bis 2,5 µm liegt.

8. Verfahren zur Herstellung eines Gaslagers einer Vakuumpumpe (1) gemäß einem der Ansprüche 1 bis 7, wobei man die Hartschicht (10) durch ein Beschichtungsverfahren aufbringt, das ausgewählt ist aus der Gruppe PVD, CVD, Elektrolyse oder Implantation von ungeladenen Atomen oder Molekülen.

9. Verfahren gemäß Anspruch 8, **dadurch gekennzeichnet, dass** man als Beschichtungsverfahren ein plasmaunterstütztes PVD- oder CVD-Verfahren einsetzt.

10. Verfahren gemäß Anspruch 8, **dadurch gekennzeichnet, dass** man vor der Beschichtung in einem Verfahrenschritt die Oberfläche mit Ionen, insbesondere mit Argon-Ionen, ätzt.

## Claims

1. A vacuum pump (1) free of lubricant and comprising an intake opening (2), an outlet opening (3), a shaft (4) carrying a gas bearing rotor and supported in gas bearings (5), **characterized in that** at least the gas bearing surface (9) facing towards the shaft (4) and/or facing towards the gas bearing rotor (16) has a hard layer (10) having a layer thickness within a range of from 0.5 to 30 µm and made of a material having a microhardness of at least 1000 HK at a measuring force of 0.01 N.

2. The vacuum pump (1) according to claim 1, **characterized by** comprising gas bearing stator elements (11) designed to have inlet and outlet channels as gas supply means (12) and gas outlet openings (13), respectively.

3. The vacuum pump (1) according to claim 1, **characterized in that** only that part of the gas bearing stator elements (11) that directly faces towards the shaft (4) bears the hard layer (10).

4. The vacuum pump (1) according to claim 1, **characterized in that** the material of the hard layer (10) is selected from carbon or carbides, nitrides or carbonitrides of the metals W, Cr or Ti.

5. The vacuum pump (1) according to claim 1, **characterized in that** the layer thickness of the hard layer (10) varies by not more than 10% throughout the layer.

6. The vacuum pump (1) according to claim 1, **characterized in that** the Rₐ roughness of the hard layer (10) is up to 500 nm, especially up to 100 nm.

7. The vacuum pump (1) according to claim 1, **characterized in that** the layer thickness of the hard layer (10) is within a range of from 1 to 5 µm, especially from 1 to 2.5 µm.

8. A process for the preparation of a gas bearing of a vacuum pump (1) according to any of claims 1 to 7 in which the hard layer (10) is applied by a coating method selected from the group consisting of PVD, CVD, electrolysis or implantation of uncharged atoms or molecules.

9. The process according to claim 8, **characterized in that** a plasma-supported PVD or CVD process is employed as the coating method.

10. The process according to claim 8, **characterized in that** the surface is etched with ions, especially with argon ions, in one process step before the coating operation.

## Revendications

1. Pompe à vide sans lubrifiant (1) comprenant une ouverture d'aspiration (2), une ouverture de refoulement (3), un arbre (4) portant un rotor d'un palier à gaz et maintenu dans des paliers à gaz (5), **caractérisée en ce qu'**au moins la surface (9) du palier à gaz orientée vers ledit arbre (4) et/ou ledit rotor d'un palier à gaz (16) possède une couche dure (10) avec une épaisseur de couche comprise entre 0,5 et 30 µm, constituée d'un matériau ayant une microdureté d'au moins 1000 HK pour une force de mesure de 0,01 N.

2. Pompe à vide (1) selon la revendication 1, **caractérisée en ce qu'**elle comprend des éléments (11) de palier à gaz structurés de manière à avoir des canaux d'entrée et des canaux de sortie comme dispositifs d'admission de gaz (12) et comme ouvertures de sortie de gaz (13).

3. Pompe à vide (1) selon la revendication 1, **caractérisée en ce que** seulement la partie des éléments (11) de palier à gaz qui est directement orientée vers ledit arbre (4) possède ladite couche dure (10).

4. Pompe à vide (1) selon la revendication 1, **caractérisée en ce que** le matériau de la couche dure (10) est choisi parmi le carbone ou les carbures, nitrures ou carbonitrures des métaux W, Cr ou Ti.

5. Pompe à vide (1) selon la revendication 1, **caractérisée en ce que** l'épaisseur de couche de la couche dure (10) ne varie pas de plus de 10 % à travers la couche entière.

6. Pompe à vide (1) selon la revendication 1, **caractérisée en ce que** la rugosité Ra de la couche dure (10) va jusqu'à 500 nm, notamment jusqu'à 100 nm.

7. Pompe à vide (1) selon la revendication 1, **caractérisée en ce que** l'épaisseur de couche de la couche dure (10) est comprise entre 1 et 5 µm, notamment entre 1 et 2,5 µm.

8. Procédé de production d'un palier à gaz d'une pompe à vide (1) selon l'une quelconque des revendications 1 à 7, dans lequel la couche dure (10) est appliquée par un procédé de revêtement choisi dans le groupe consistant d'un procédé de dépôt physique en phase vapeur (PVD), d'un procédé de dépôt chimique en phase vapeur (CVD), d'une électrolyse ou d'une implantation d'atomes ou de molécules non chargés.

9. Procédé selon la revendication 8, **caractérisée en ce qu'**un procédé PVD ou CVD assisté par plasma est utilisé comme procédé de revêtement.

10. Procédé selon la revendication 8, **caractérisée en ce que** la surface est gravée avec des ions, notamment des ions d'argon, dans une seule étape avant le revêtement.
